# FASCICULE DE BREVET EUROPEEN

(11) **EP 1 239 940 B1**
(45) Date de publication et mention de la délivrance du brevet: **27.08.2003**
(21) Numéro de dépôt: 00985389.6
(22) Date de dépôt: 01.12.2000
(51) Int. Cl.: B01D 47/06, B01D 53/78

(54) **UNITE DE MISE EN CONTACT DE LIQUIDE ET DE FUMEES POURVUE D'UNE RESERVE DE LIQUIDE DE SECURITE, ET PROCEDE D'ALIMENTATION DE CETTE RESERVE**
KONTAKTVORRICHTUNG FÜR FLÜSSIGKEIT UND RAUCHGASE MIT EINER FLÜSSIGKEITSSICHERHEITSRESERVE UND VERFAHREN ZUM REGELN DES FÜLLSTANDS DER RESERVE
UNIT FOR CONTACTING LIQUID AND FUMES PROVIDED WITH A SAFETY LIQUID RESERVE, AND METHOD FOR FEEDING SAID RESERVE

(30) Priorité: 02.12.1999 FR 9915219
(43) Date de publication de la demande: 18.09.2002
(73) Titulaire: LAB SA, 69003 Lyon (FR)
(72) Inventeur: WOILLEZ, Jacques, F-69006 Lyon (FR); GOURMELON, Fabrice, F-69006 Lyon (FR)
(74) Mandataire: Schouller, Jean-Philippe
(86) Numéro de dépôt international: FR0003367
(87) Numéro de publication internationale: WO01039866

(56) Documents cités:
- DE-U- 8 490 072
- FR-A- 2 637 821
- US-A- 1 798 563

## Description

La présente invention concerne une unité de mise en contact de liquide et de fumées pourvue d'une réserve de liquide de sécurité, ainsi qu'un procédé d'alimentation de cette réserve.

Dans le domaine du traitement des fumées industrielles, une telle unité de mise en contact assure le refroidissement des fumées qui y sont admises ainsi que, le cas échéant, la captation des polluants initialement présents dans ces fumées. Dans cette dernière configuration, cette unité est alors dénommée laveur humide.

De manière classique, une unité de mise en contact de liquide et de fumées comprend une enceinte, dans laquelle sont admis les gaz à traiter et dont sont évacués les gaz refroidis. Des moyens de répartition de liquide, tels que des pulvérisateurs ou des garnissages, sont disposés à l'intérieur de cette enceinte. Il est par ailleurs prévu un circuit de recyclage du liquide, s'étendant entre le fond de l'enceinte et les moyens de répartition, ainsi que des lignes d'appoint et de purge, au moins une pompe assurant l'entraînement du liquide le long de ce circuit.

En cas de panne de ces pompes, l'enveloppe de l'enceinte est soumise à un échauffement dû à l'arrivée de fumées non refroidies, en particulier lorsque cette enveloppe est réalisée en matériau plastique. Pour pallier une éventuelle défaillance de ces pompes, il est connu d'aménager une réserve de liquide de sécurité. Cette réserve, dont le niveau est contrôlé en permanence par une vanne, est située au-dessus de l'enceinte et se trouve mise en communication avec le circuit de recyclage du liquide par l'intermédiaire d'un conduit, sur lequel est interposée une vanne d'admission, qui est fermée en fonctionnement normal.

Lorsqu'une défaillance des pompes se produit, on ouvre la vanne d'admission, de manière à transférer par gravité le volume de liquide initialement contenu dans la réserve. Ceci contribue au refroidissement de l'enceinte, avant qu'il ne soit procédé à une interruption de l'alimentation en fumées chaudes.

Cette solution connue présente certains inconvénients. En effet, une mise en oeuvre satisfaisante de cette réserve de sécurité nécessite, d'une part, que son remplissage soit en permanence suffisant et, d'autre part, que le volume de liquide qui y est admis puisse s'écouler de façon fiable vers l'enceinte de l'unité. Ceci implique le bon fonctionnement de la vanne de contrôle du niveau de la réserve, ainsi que de la vanne d'admission du liquide vers l'enceinte. Etant donné que ces organes de contrôle sont susceptibles d'être défaillants, ils sont souvent prévus en double, ce qui induit des investissements importants.

De plus, le liquide contenu dans la réserve de sécurité constitue un volume mort, qui ne contribue pas à la mise en oeuvre du procédé de refroidissement et, le cas échéant, de captation. Lors du vidage de ce liquide, il est nécessaire de le récupérer au sein d'une capacité annexe, en général la partie inférieure de l'enceinte. Ceci induit un surdimensionnement de l'unité et en augmente le coût.

Lorsque la réserve est implantée à l'air ambiant, il est nécessaire de prévoir un dispositif de réchauffage de cette réserve, de manière à la maintenir en permanence à l'abri du gel. Ceci implique des coûts supplémentaires, en particulier en termes énergétiques.

Enfin, lorsque le liquide de refroidissement véhicule des matières solides en suspension, la zone de jonction entre le circuit de recyclage et le conduit mettant en communication la réserve avec l'enceinte forme une zone morte, qui est susceptible d'être bouchée au moins partiellement par ces matières solides. Dans cette éventualité, un écoulement fiable du liquide de sécurité en direction de l'enceinte n'est pas garanti, ce qui peut compromettre l'intégrité de cette enceinte.

Le document DE-U-8490072 décrit toutes les caractéristiques du préambule de la revendication 1.

L'invention se propose de réaliser une unité de mise en contact de liquides et de fumées pourvue d'une réserve de liquide permettant de pallier ces différents inconvénients.

A cet effet, elle a pour objet une unité de mise en contact de liquide et de fumées selon la revendication 1.

L'invention a également pour objet un procédé d'alimentation de la réserve de liquide de sécurité appartenant à l'unité de mise en contact de liquide et de fumées définie ci-dessus, ce procédé étant conforme à la revendication 9.

Des caractéristiques avantageuses de l'invention font l'objet des sous-revendications.

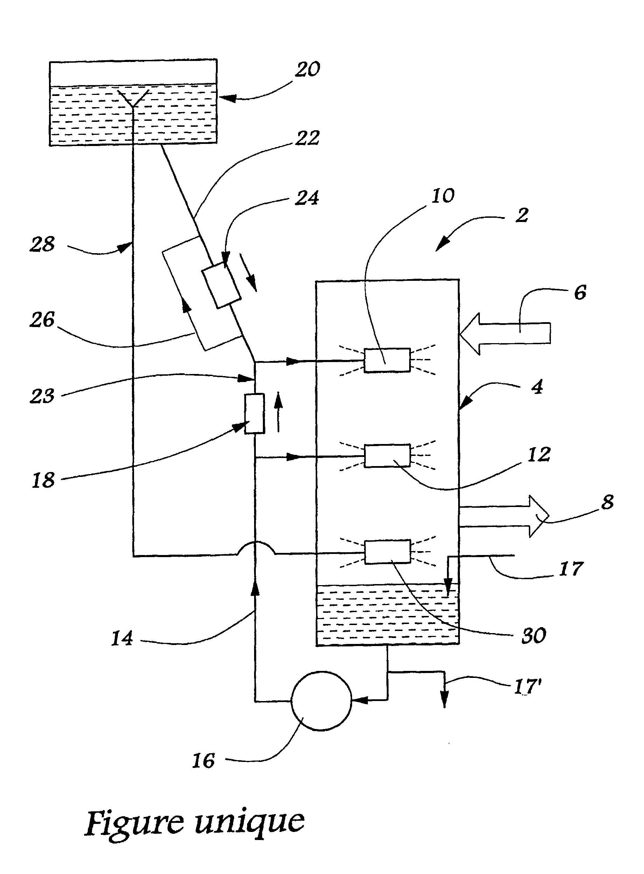

L'invention va être décrite ci-dessous, en référence à la figure unique annexée, donnée uniquement à titre d'exemple non limitatif, qui est une représentation schématique d'une unité de mise en contact de liquide et de fumées conforme à l'invention.

L'unité de mise en contact de liquide et de fumées illustrée sur la figure est un laveur, désigné dans son ensemble par la référence 2. Ce laveur comprend une enceinte cylindrique 4, dont le volume intérieur est mis en relation avec une conduite 6 d'arrivée des gaz à traiter, ainsi qu'avec une conduite 8 de sortie des gaz refroidis.

Deux pulvérisateurs 10, 12, sont disposés l'un au-dessus de l'autre dans l'enceinte 4. Ils forment deux étages de répartition de liquide à l'intérieur de cette enceinte et sont alimentés par une ligne de recyclage 14 s'étendant à partir du fond de l'enceinte 4 en direction de chaque pulvérisateur 10, 12, une pompe 16 permettant de véhiculer ce liquide le long de la ligne 14.

Il est par ailleurs prévu des conduites d'appoint 17 et de purge 17' de liquide, ainsi qu'un clapet anti-retour 18, disposé sur le tronçon de la ligne 14 situé entre les deux pulvérisateurs 10, 12. Ce clapet anti-retour assure le passage du liquide uniquement dans le sens de la montée, à savoir en direction du pulvérisateur supérieur 10.

Le laveur 2 est pourvu d'une réserve de liquide de sécurité, qui est formée par un bac 20 en communication avec la ligne de recyclage 14. A cet effet, un conduit 22 s'étend entre le fond du bac 20 et la partie supérieure de la ligne de recyclage 14, disposée au-dessus du clapet anti-retour 18. Le diamètre de ce conduit 22 est voisin de celui de la portion 23 de la ligne 14 placée de façon adjacente à ce conduit. Le conduit 22 est muni d'un clapet anti-retour 24, qui permet l'écoulement du liquide uniquement dans le sens de la descente, c'est-à-dire depuis le bac 20 vers la ligne de recyclage 14.

Une dérivation 26, qui est piquée sur le conduit 22, s'étend de part et d'autre du clapet anti-retour 24. Cette dérivation est propre à assurer un débit de liquide sensiblement inférieur à celui du liquide circulant dans la ligne 14 ou dans le conduit 22. A cet effet, le rapport des sections de passage, S et s, du conduit 22 et de la dérivation 26 est compris entre 1,5 et 10, de préférence 2 et 5. La dérivation peut être de section constante ou présenter une restriction localisée.

Une tuyauterie 28 met en relation le bac 20 avec le volume intérieur de l'enceinte 4. Cette tuyauterie 28, qui est propre à récupérer le trop-plein du bac 20, alimente un pulvérisateur supplémentaire 30, disposé au-dessous du pulvérisateur 12. Cette tuyauterie 28, qui n'est pas mise en communication avec la ligne de recyclage 14, possède une section de passage analogue à celle de cette ligne de recyclage.

Le fonctionnement du laveur 2 et de sa réserve de liquide de sécurité 20 va maintenant être expliqué.

En mode opératoire normal, la pompe 16 véhicule du liquide dans la ligne de recyclage 14, ce qui permet le refroidissement du volume intérieur de l'enceinte 4 par l'intermédiaire des pulvérisateurs 10, 12. Ce refroidissement garantit l'intégrité mécanique de l'enveloppe de l'enceinte 4, de sorte qu'il n'est pas nécessaire de faire appel à un quelconque volume de liquide de sécurité.

Par ailleurs, la pompe alimente le conduit 22. Du fait de la présence du clapet anti-retour 24, le liquide mis en mouvement par la pompe est transféré vers le bac 20, uniquement par la dérivation 26 de faible section. Le débit de liquide admis dans cette dérivation est typiquement compris entre 30 et 70%, de préférence entre 40 et 60% du débit de liquide circulant dans la portion 23 de ligne de recyclage 14 disposée au voisinage du conduit 22.

Le liquide dirigé par la dérivation 26 alimente en continu le bac 20, de sorte que ce dernier se trouve, en régime normal, en débordement permanent. Le liquide débordant du bac 20 s'écoule par gravité dans la tuyauterie 28 puis est réparti dans le volume intérieur de l'enceinte 4, par le pulvérisateur 30.

Lors du démarrage du laveur 2, le bac 20 est vide et il est préférable d'attendre son remplissage intégral avant d'admettre des fumées chaudes dans l'enceinte 4, par l'intermédiaire de la conduite 6.

En régime normal, il est possible d'ajouter, dans le bac 20, des réactifs chimiques permettant la mise en oeuvre de réactions visant à l'épuration des fumées admises dans l'enceinte 4.

Lorsque la pompe 16 ne fonctionne plus, elle n'assure plus la circulation du liquide le long de la ligne 14 et de la dérivation 26. Cette absence de mouvement ascendant du liquide dans la dérivation 26 induit le déversement, par gravité, du liquide initialement présent dans le bac 20. Ce liquide est transféré vers le circuit 14 à un débit nettement plus élevé que celui du liquide ascendant, dans la mesure où il est à même d'emprunter le conduit 22 de forte section, le clapet anti-retour 24 étant ouvert.

Seul le pulvérisateur supérieur 10 est alimenté par le liquide initialement présent dans le bac 20, du fait de la présence du clapet anti-retour 18. En variante, on peut prévoir plusieurs pulvérisateurs au niveau de cet étage supérieur, ou bien encore que plusieurs étages supérieurs soient alimentés. La pulvérisation du liquide permet le refroidissement du volume intérieur de l'enceinte, pendant une durée permettant de procéder à l'interruption de l'arrivée de fumées par la conduite 6. Une fois la pompe remise en service, on procède au remplissage du bac 20 avant d'admettre à nouveau des fumées par ce conduit 6, comme cela a été expliqué ci-dessus.

L'invention n'est pas limitée aux exemples décrits et représenté.

Ainsi, il est envisageable de remplacer le conduit 22 et sa dérivation 26, par un unique conduit reliant le circuit 14 d'alimentation et de recyclage et le bac 20. Ce conduit unique assure alors la circulation de liquide entre le circuit 14 et le bac 20, dans les sens ascendant et descendant. La section de passage de ce conduit unique est fixée de manière à assurer un débit suffisant en mode gravitaire descendant, depuis le bac 20 en direction du pulvérisateur 10. A cet effet, le rapport entre, d'une part, la section de passage de la portion 23 de la ligne 14 adjacente à ce conduit et, d'autre part, la section de passage de ce conduit unique est compris entre 3 et 10, de préférence entre 5 et 7. On alimente ce conduit unique en liquide, selon un débit compris entre 30 et 90%, de préférence entre 50 et 75%, du débit de liquide circulant dans la ligne 14.

L'invention permet de réaliser les objectifs précédemment mentionnés puisqu'elle permet de pallier satisfaisante d'éventuelles pannes des pompes de circulation de liquide.

En effet, la réserve de sécurité contient en permanence un volume de liquide suffisant, dans la mesure où cette réserve est alimentée en continu depuis la ligne de recyclage du liquide. Ce remplissage, qui est automatique, ne nécessite pas l'utilisation d'organe de contrôle. Ceci est à comparer avec l'art antérieur, dans lequel il est fait appel à une vanne de contrôle du niveau.

De plus, le transfert du volume de liquide contenu dans cette réserve, en direction de l'enceinte, s'effectue de manière sûre en cas de défaillance de la pompe, puisque c'est précisément la mise hors service de cette pompe qui provoque un tel transfert, par gravité. Ceci est à comparer avec l'art antérieur, dans lequel l'écoulement du volume de liquide de sécurité est subordonné à l'ouverture d'une vanne d'admission.

Conformément à l'invention, l'intégrité mécanique de l'enceinte est assurée de façon automatique, sans faire appel à des organes de contrôle et de déclenchement. S'affranchir de tels organes autorise donc une diminution significative, par rapport à l'art antérieur, des coûts d'investissement et de fonctionnement de l'unité de l'invention.

Lorsque la réserve de sécurité de l'unité de l'invention est à l'air ambiant, il n'est pas nécessaire de lui adjoindre un quelconque dispositif de chauffage, dans la mesure où elle est soit vide, soit alimentée en permanence avec de l'eau chaude, de sorte qu'elle n'est pas sujette au gel. Ceci représente une source supplémentaire de réduction des coûts par rapport à l'art antérieur.

L'unité conforme à l'invention évite, dans une large mesure, tout bouchage par des matières en suspension. En effet, la zone de jonction entre la ligne de recyclage 14 et le conduit 22 d'alimentation du bac 20 est le lieu d'un écoulement permanent de liquide chaud, ce qui élimine le risque d'accumulation de ces matières solides.

Il est avantageux de prévoir des moyens de transfert assurant un écoulement ascendant de liquide avec un débit inférieur à celui de l'écoulement descendant. En effet, dans le sens ascendant, le faible débit autorisé n'induit qu'une légère consommation énergétique supplémentaire, au niveau de la pompe de circulation. Par ailleurs, le fort débit permis dans le sens descendant garantit le refroidissement rapide du volume intérieur de l'enceinte.

Prévoir des moyens de renvoi du trop-plein du bac en direction de l'enceinte est avantageux, en termes de consommation de liquide. Cette mesure est tout particulièrement avantageuse lorsque ces moyens de renvoi permettent l'alimentation d'un pulvérisateur supplémentaire, réalisant un refroidissement supplémentaire.

Ajouter des réactifs chimiques dans le volume intérieur de la réserve garantit une utilisation particulièrement judicieuse de cette dernière. Cette mesure permet d'initier, dans la réserve même, des réactions chimiques liées à la captation des polluants. De plus, cette réserve est d'un accès particulièrement aisé, ce qui est à comparer avec l'art antérieur, dans lequel il est prévu d'ajouter des réactifs dans la partie inférieure de l'enceinte, difficile d'accès.

## Revendications

1. Unité (2) de mise en contact de liquide et de fumées, comprenant une enceinte (4) de mise en contact du liquide et des fumées, des moyens (10, 12) de répartition du liquide dans ladite enceinte (4), un circuit (14) d'alimentation des moyens de répartition (10, 12) en liquide, comportant notamment une pompe (16), ladite unité comportant en outre une réserve (20) de liquide de sécurité, disposée à un niveau supérieur à celui de ladite enceinte (4) et des moyens de transfert (22, 26) dudit liquide par gravité, depuis la réserve vers le circuit d'alimentation, **caractérisée en ce que** les moyens de transfert (22, 26) sont adaptés pour permettre une circulation du liquide dans les deux sens ascendant et descendant, cette circulation étant constamment-possible dans au moins un des deux sens et s'effectuant dans un sens ou dans l'autre en fonction des conditions de pression qui prévalent dans le circuit d'alimentation (14).

2. Unité selon la revendication 1, **caractérisée en ce qu'**il est prévu des moyens (28, 30) de renvoi du liquide de la réserve (20) vers l'enceinte (4), indépendants du circuit d'alimentation (14) et des moyens de transfert (22, 26).

3. Unité selon la revendication 2, **caractérisée en ce que** lesdits moyens de renvoi (28) sont adaptés pour être alimentés par un trop-plein de la réserve (20).

4. Unité selon la revendication 2 ou 3, **caractérisée en ce que** lesdits moyens de renvoi sont reliés à des moyens supplémentaires (30) de répartition du liquide à l'intérieur de l'enceinte (4).

5. Unité selon l'une des revendications 1 à 4, **caractérisée en ce que** les moyens de transfert (22, 26) sont adaptés pour assurer un débit de liquide, dans le sens ascendant, sensiblement inférieur au débit de liquide dans le sens descendant.

6. Unité selon la revendication 5, **caractérisée en ce que** les moyens de transfert comprennent un conduit (22) possédant une première section (S) de passage et qui est muni d'un organe (24) autorisant le passage du liquide uniquement dans le sens de la descente, notamment un clapet anti-retour, ainsi qu'une dérivation (26) piquée sur ledit conduit (22) et s'étendant de part et d'autre dudit organe (24), ladite dérivation possédant une deuxième section de passage (s), sensiblement inférieure à ladite première section (S).

7. Unité selon la revendication 6, **caractérisée en ce que** le rapport entre la première section (S) et la deuxième section (s) est compris entre 1,5 et 10, de préférence entre 2 et 5.

8. Unité selon l'une des revendications 1 à 4, **caractérisée en ce que** les moyens de transfert comprennent un unique conduit reliant la réserve (20) et le circuit d'alimentation (14), le rapport entre la section de passage de la portion (23) du circuit d'alimentation adjacente à ce conduit et la section de passage de ce conduit unique étant compris entre 3 et 10, de préférence entre 5 et 8.

9. Procédé d'alimentation de la réserve (20) de liquide de sécurité appartenant à l'unité (2) de mise en contact de liquide et de fumées selon l'une quelconque des revendications précédentes, **caractérisé en ce qu'**on alimente en continu ladite réserve (20) depuis ledit circuit d'alimentation (14), par l'intermédiaire de ladite pompe (16).

10. Procédé selon la revendication 9, pour l'alimentation de l'unité selon l'une quelconque des revendications 5 à 7, **caractérisé en ce qu'**on alimente ladite réserve (20) depuis le circuit d'alimentation (14) selon un débit compris entre 30 et 70%, de préférence entre 40 et 60%, du débit de liquide à l'intérieur de la portion (23) dudit circuit d'alimentation (14) adjacente aux moyens de transfert (22, 26).

11. Procédé selon la revendication 9, pour l'alimentation de l'unité selon la revendication 8, **caractérisé en ce qu'**on alimente la réserve (20) depuis le circuit d'alimentation (14) selon un débit compris entre 50 et 100%, de préférence entre 65 et 85% du débit de liquide à l'intérieur de la portion (23) du circuit d'alimentation (14) adjacente à cet unique conduit.

12. Procédé selon l'une des revendications 9 à 11, **caractérisé en qu**'on alimente ladite réserve (20) en débordement.

13. Procédé selon l'une des revendications 9 à 12, **caractérisé en ce qu'**on ajoute, dans le volume intérieur de la réserve (20), au moins un réactif permettant l'initiation d'une réaction chimique dans ladite réserve (20).

## Patentansprüche

1. Vorrichtung (2) zum Herstellen von Kontakt zwischen Flüssigkeit und Rauchgasen, umfassend einen Behälter (4) zum Herstellen von Kontakt zwischen der Flüssigkeit und den Rauchgasen, Einrichtungen (10, 12) zur Verteilung der Flüssigkeit in dem Behälter (4), einen Kreislauf (14) zur Versorgung der Verteilungseinrichtungen (10, 12) mit Flüssigkeit, der insbesondere eine Pumpe (16) umfasst, wobei die Vorrichtung außerdem eine Reserve (20) mit Sicherheitsflüssigkeit umfasst, die auf einem höheren Niveau als der Behälter (4) angeordnet ist, und Transporteinrichtungen (22, 26) der Flüssigkeit durch Schwerkraft, von der Reserve zu dem Versorgungskreislauf, **dadurch gekennzeichnet, dass** die Transporteinrichtungen (22, 26) dazu ausgestaltet sind, um eine Zirkulation der Flüssigkeit in beide Richtungen, aufsteigend und absteigend, zu ermöglichen, wobei diese Zirkulation mindestens in einer der beiden Richtungen ständig möglich ist und in die eine oder in die andere Richtung in Abhängigkeit der Druckbedingungen stattfindet, die in dem Versorgungskreislauf (14) vorherrschen.

2. Vorrichtung nach Anspruch 1, **dadurch gekennzeichnet, dass** Einrichtungen (28, 30) zum Zurückführen der Flüssigkeit von der Reserve (20) zu dem Behälter (4) unabhängig von dem Versorgungskreislauf (14) und den Transporteinrichtungen (22, 26) vorgesehen sind.

3. Vorrichtung nach Anspruch 2, **dadurch gekennzeichnet, dass** die Einrichtungen zum Zurückführen (28) dazu ausgestaltet sind, um durch einen Überlauf der Reserve (20) versorgt zu werden.

4. Vorrichtung nach Anspruch 2 oder 3, **dadurch gekennzeichnet, dass** die Einrichtungen zum Zurückführen mit zusätzlichen Einrichtungen (30) zur Verteilung der Flüssigkeit im Innern des Behälters (4) verbunden sind.

5. Vorrichtung nach einem der Ansprüche 1 bis 4, **dadurch gekennzeichnet, dass** die Transporteinrichtungen (22, 26) dazu ausgestaltet sind, um einen Flüssigkeitsdurchsatz in aufsteigender Richtung zu sichern, der im Wesentlichen niedriger ist als der Flüssigkeitsdurchsatz in absteigender Richtung.

6. Vorrichtung nach Anspruch 5, **dadurch gekennzeichnet, dass** die Transporteinrichtungen eine Leitung (22) umfassen, die einen ersten Durchgangsquerschnitt (S) aufweist und die mit einem Element (24) versehen ist, das den Durchgang der Flüssigkeit nur in absteigender Richtung zulässt, insbesondere ein Rückschlagventil, als auch eine Ableitung (26), die von der Leitung (22) abzweigt und auf beiden Seiten des Elementes (24) verläuft, wobei die Ableitung einen zweiten Durchgangsquerschnitt (s) aufweist, der im Wesentlichen kleiner als der erste Querschnitt (S) ist.

7. Vorrichtung nach Anspruch 6, **dadurch gekennzeichnet. dass** das Verhältnis zwischen dem ersten Querschnitt (S) und dem zweiten Querschnitt (s) zwischen 1,5 und 10, vorzugsweise zwischen 2 und 5 liegt.

8. Vorrichtung nach einem der Ansprüche 1 bis 4, **dadurch gekennzeichnet. dass** die Transporteinrichtungen eine einzelne Leitung umfassen, die die Reserve (20) und den Versorgungskreislauf (14) verbindet, wobei das Verhältnis zwischen dem Durchgangsquerschnitt des Bereiches (23) des Versorgungskreislaufes, der an diese Leitung angrenzt, und der Durchgangsquerschnitt dieser einzelnen Leitung zwischen 3 und 10, vorzugsweise zwischen 5 und 8 liegt.

9. Verfahren zur Versorgung der Reserve (20) mit Sicherheitsflüssigkeit, die zu der Vorrichtung (2) zum Herstellen von Kontakt zwischen Flüssigkeit und Rauchgasen gehört, nach irgendeinem der vorhergehenden Ansprüche, **dadurch gekennzeichnet, dass** die Reserve (20) kontinuierlich von dem Versorgungskreislauf (14) aus mittels der Pumpe (16) versorgt wird.

10. Verfahren nach Anspruch 9, zur Versorgung der Vorrichtung nach irgendeinem der Ansprüche 5 bis 7, **dadurch gekennzeichnet, dass** die Reserve (20) von dem Versorgungskreislauf (14) aus mit einem Durchsatz versorgt wird, der zwischen 30 % und 70 %, vorzugsweise zwischen 40 % und 60 % des Flüssigkeitsdurchsatzes im Innern des Bereiches (23) des Versorgungskreislaufes (14) liegt. der an die Transporteinrichtungen (22, 26) angrenzt.

11. Verfahren nach Anspruch 9, zur Versorgung der Vorrichtung nach Anspruch 8, **dadurch gekennzeichnet, dass** die Reserve (20) von dem Versorgungskreislauf (14) aus mit einem Durchsatz versorgt wird, der zwischen 50 % und 100 %, vorzugsweise zwischen 65 % und 85 % des Flüssigkeitsdurchsatzes im Innern des Bereiches (23) des Versorgungskreislaufes (14) liegt, der an diese einzelne Leitung angrenzt.

12. Verfahren nach einem der Ansprüche 9 bis 11. **dadurch gekennzeichnet, dass** die Reserve (20) durch Überlaufen versorgt wird.

13. Verfahren nach einem der Ansprüche 9 bis 12, **dadurch gekennzeichnet, dass** in dem Innenraum der Reserve (20) mindestens ein Reaktionsmittel zugegeben wird, das die Auslösung einer chemischen Reaktion in der Reserve (20) auslöst.

## Claims

1. A unit (2) for contacting liquid and fumes, comprising a chamber (4) for contacting the liquid and the fumes, means (10, 12) for distributing the liquid in said chamber (4), a feed circuit (14) for supplying the distribution means (10,12) with liquid, comprising in particular a pump (16), said unit furthermore comprising a safety liquid reserve (20), located at a higher level than that of said chamber (4) and gravity transfer means (22, 26) for said liquid from the reserve to the feed circuit, **characterised in that** the transfer means (22, 26) are suitable to permit circulation of the liquid in both the upward and downward directions, this circulation being constantly possible in at least one of the two directions and taking place in one or the other direction according to the pressure conditions prevailing in the feed circuit (14).

2. A unit according to Claim 1, **characterised in that** means (28, 30) are provided for returning the liquid from the reserve (20) to the chamber (4) which are independent of the feed circuit (14) and the transfer means (22, 26).

3. A unit according to Claim 2, **characterised in that** said return means (28) are suitable for being fed by an overflow of the reserve (20).

4. A unit according to Claim 2 or 3, **characterised in that** said return means are connected to additional means (30) for distributing the liquid within the chamber (4).

5. A unit according to one of Claims 1 to 4, **characterised in that** the transfer means (22, 26) are suitable for providing a flow of liquid in the upward direction which is substantially less than the flow of liquid in the downward direction.

6. A unit according to Claim 5, **characterised in that** the transfer means comprises a line (22) having a first passage cross-section (S) and which is provided with an element (24) permitting passage of the liquid solely in the downward direction, in particular a non-return valve, and also a loop (26) branched from said line (22) and extending on either side of said element (24), said branch having a second passage cross-section (s), substantially less than said first section (S).

7. A unit according to Claim 6, **characterised in that** the ratio between the first section (S) and the second section (s) is between 1.5 and 10, preferably between 2 and 5.

8. A unit according to one of Claims 1 to 4, **characterised in that** the transfer means comprise a single line connecting the reserve (20) and the feed circuit (14), the ratio between the passage cross-section of the portion (23) of the feed circuit adjacent to this line and the passage cross-section of this single line being between 3 and 10, preferably between 5 and 8.

9. A process for supplying the safety liquid reserve (20) belonging to the unit (2) for contacting liquid and fumes according to any one of the preceding claims, **characterised in that** said reserve (20) is continuously supplied from said feed circuit (14), by means of said pump (16).

10. A process according to Claim 9, for supplying the unit according to any one of Claims 5 to 7, **characterised in that** said reserve (20) is supplied from the feed circuit (14) at a rate of between 30 and 70%, preferably between 40 and 60%, of the rate of liquid within the portion (23) of said feed circuit (14) adjacent to the transfer means (22, 26).

11. A process according to Claim 9, for supplying the unit according to Claim 8, **characterised in that** the reserve (20) is supplied from the feed circuit (14) at a rate of between 50 and 100%, preferably between 65 and 85%, of the rate of liquid within the portion (23) of the feed circuit (14) adjacent to this single line.

12. A process according to one of Claims 9 to 11, **characterised in that** said reserve (20) is supplied from overflow.

13. A process according to one of Claims 9 to 12, **characterised in that** at least one reagent which permits the initiation of a chemical reaction in the reserve (20) is added to the internal volume of said reserve (20).
